# EUROPEAN PATENT APPLICATION

(11) **EP 1 826 107 A2**
(43) Date of publication of application: **29.08.2007**
(21) Application number: 07250826.0
(22) Date of filing: 28.02.2007
(51) Int. Cl.: B62D 59/04

(54) **Trailer manoeuvring system**

(30) Priority: 28.02.2006 GB 0603966
(71) Applicant: Yates, James Richard, Christchurch BH23 4HD (GB)
(72) Inventor: Yates, James Richard, Christchurch BH23 4HD (GB)
(74) Representative: Targett, Kenneth Stanley

(57) **Abstract**

A system for manoeuvring a wheeled trailer (10), when it is not being towed, has at least one motor unit (18) operable to move the trailer and a hand-holdable remote control (36) operable by an operator of the system positioned near the trailer so as to control the motor unit(s). A detector system (48) can detect obstacles in the proximity of the trailer, and the remote control is arranged to provide to the operator an indication of any obstacles detected by the detector means. The remote control is also operable to vary the speed of at least some of the manoeuvres that can be performed by the motor unit(s). The detector system can also detect obstacles at least part-way along the sides of the trailer, this last feature also being applicable in the case where the trailer does not have a remote-controlled motor unit.

## Description

This invention relates to systems for manoeuvring, or assisting in manoeuvring, wheeled trailers such as caravans, boat trailers, horse trailers and general purpose trailers.

In order to facilitate manoeuvring of such trailers when they are not coupled to a towing vehicle, it is known to provide a manoeuvring system. For example, patent documents GB2316922A and GB2371278A describe such systems comprising a pair of motor units operable to move the trailer, and a hand-holdable remote control operable by an operator of the system positioned near the trailer so as to control the motor unit(s). Such a system has the advantage that it is possible for a single person to manoeuvre the trailer with very little physical exertion on their part.

There is a problem with such systems in that the operator may accidentally crash the trailer into an obstacle causing damage and/or injury, especially if the operator is manoeuvring the trailer without the assistance of anybody else who can watch out for obstacles. An aim of a first aspect of the present invention, or at least of specific embodiments of it, is to overcome or alleviate this problem.

In accordance with the first aspect of the invention, the manoeuvring system is provided with detector means for mounting on the trailer and detecting obstacles in the proximity of the trailer, and the remote control is arranged to provide to the operator an indication of any obstacles detected by the detector means. Accordingly, if the operator is given an indication of an obstacle, they can stop the motor units and move to a position where they can see the obstacle before continuing with manoeuvring the trailer. It is, of course, well-known to provide motor cars with obstacle detection systems that can detect obstacles in front of, behind or at the corners of the car, and to provide an audible and/or visual dashboard indication of the presence of an obstacle so as to assist the driver of the car with parking. However, in the system of the first aspect of invention, it is the remote control that provides the indication of the obstacle to the operator, and in normal use the remote control would be held by the operator. The indication is therefore given close to the operator and moves with the operator as the operator moves around the trailer so that the operator can readily take notice of it.

A second aspect of the invention is concerned with a situation that arises in connection with obstacle detection when manoeuvring a wheeled trailer (particularly with a single axle, or with twin closely-spaced axles) that does not arise to such a degree when parking a motor car.

In accordance with a second aspect of the invention, there is provided a system for assisting in manoeuvring a wheeled trailer, the system comprising detector means for mounting on the trailer and detecting obstacles in front of, behind, at the corners of, and at least part-way along the sides of the trailer, and means for providing an indication of a detected obstacle to a person manoeuvring the trailer. This second aspect of the invention takes account of the fact that a trailer with a single axle, or with closely-spaced twin axles, can be turned without moving backwards or forwards to any great extent, or even at all. When the trailer is being spun, with the wheel(s) on one side moving forwards and the wheels on the other side moving backwards, there is a risk that the trailer may hit an obstacle to the side of the trailer. However, the detector means of the second aspect of the invention is able to detect such an obstacle.

It will be appreciated that this second aspect of the invention is applicable when the trailer is being manoeuvred not only by an auxiliary manoeuvring system but also by its normal towing vehicle, or even manually. It should be noted that patent document GB2344481A describes a motor car and single-axle caravan having a rearwardly-facing proximity sensor that is relocatable between the rear of the car and the rear of the caravan, but takes no account of the fact that when the caravan is being manoeuvred with its longitudinal axis at a large angle to the longitudinal axis of the car, there is a risk that the caravan may hit an obstacle to the side of the caravan.

It will be appreciated that a single system may embody both the first and the second aspects of the invention.

The remote control or indicating means is preferably operable to provide an indication of the general direction of a detected obstacle relative to the trailer. For example, the remote control or indicating means may be arranged to provide distinct indications of obstacles detected adjacent each of four corners and each of the front and back of the trailer. In the case of the second aspect of the invention, the remote control or indicating means is preferably also arranged to provide distinct indications of obstacles detected to each side of the trailer. This assists the operator in moving quickly to a position where they can see the obstacle.

The remote control or indicating means is preferably operable to provide an indication of the distance of the detected obstacle from the trailer. This is particularly useful if the operator cannot move to a position where they can see the obstacle.

In the manoeuvring systems of GB2316922A and GB2371278A, the remote control is operable by the operator to select different operations of two motor units to perform different manoeuvres of the trailer. In GB2316922A, for most manoeuvres each motor unit is driven at full speed in one direction, at full speed in the opposite direction, or is stopped, depending on the manoeuvre that is required. However, a manoeuvre is described in which the motor units are connected in series and the trailer wheels are turned in opposite directions. This is said to produce a slow speed spin of the trailer. In GB2371278A, the motor unit on the inside of a turn of a twin-axle trailer is driven intermittently, or at a slower speed than the motor unit on the outside of the turn, so as to reduce sideways scrubbing resistance of the tyres on the inside of the turn.

Neither GB2316922A nor GB2371278A discloses any means by which, for a particular manoeuvre, the operator of the remote control has any control over the speed of the manoeuvre. An aim of a second aspect of the present invention, or at least of specific embodiments of it, is to provide such control.

In accordance with the third aspect of the invention, the remote control is operable to enable the operator to vary the speed of at least some of the manoeuvres. On a clear run, the operator can therefore manoeuvre the trailer at high speed to as not to waste time, and in a confined space the operator can manoeuvre the trailer more slowly so as to reduce the risk of accidental damage or injury.

In one embodiment, the remote control may include a first input element or set of input elements operable by the operator to select the manoeuvre, and a second input element or set of input elements operable by the operator to control the speed of the manoeuvre. In this case, in response to operation of the first element(s), a control means is preferably operable to cause the motor unit(s) initially to rotate relatively slowly, and, in response to operation the second input element or at least one of the second input elements, the control means is operable to cause the speed of the motor unit(s) to increase. A manoeuvre therefore starts slowly and can then be accelerated if desired. One of the second set of input elements may be operable to cause the speed of the motor unit(s) to increase, and another of the second set of input elements may be operable to cause the speed of the motor unit(s) to decrease.

The remote control is preferably arranged to provide to the operator an indication related to the speed of the manoeuvre.

It will be appreciated that a single system may embody both the third aspect of the invention in combination with the first and/or second aspects of the invention.

A fourth aspect of the invention provides a trailer having a system according to the first and/or second and/or third aspect of the invention. In some cases, the invention is particularly beneficial when applied to a trailer having a single axle or twin closely-spaced axles, particularly where the axle(s) are disposed generally centrally of the length of the trailer.

A specific embodiment of the present invention will now be described, purely by way of example, with reference to the accompanying drawings, in which:
- Figure 1: is a schematic isometric view of a caravan fitted with a manoeuvring system;
- Figure 2: is a block diagram of circuitry in a control box in the caravan;
- Figure 3: is a plan view, to a much larger scale than Figure 1, of a remote control; and
- Figure 4: is a block diagram of circuitry in the remote control.

### Basic system

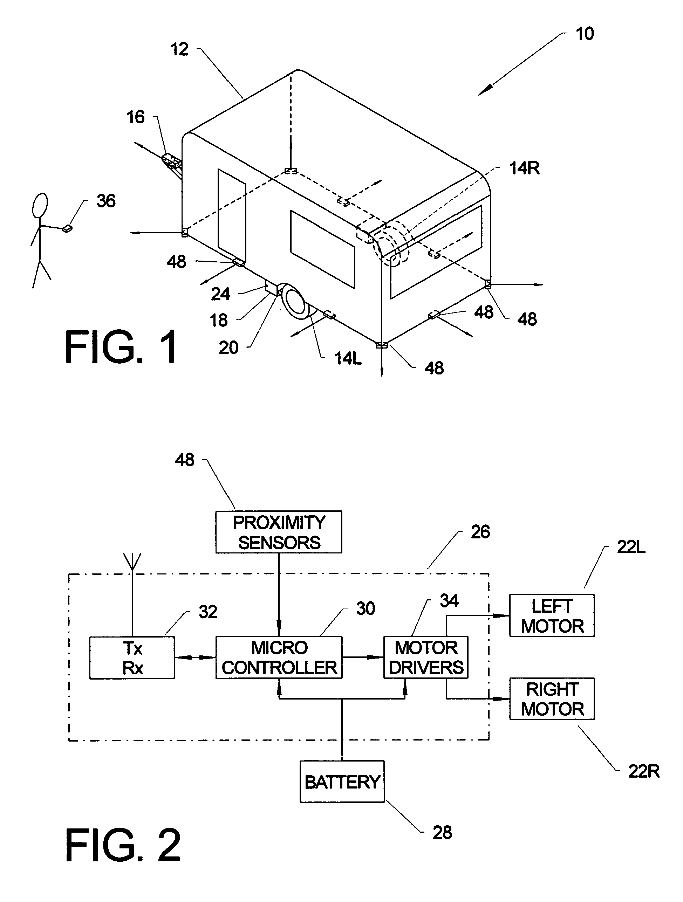

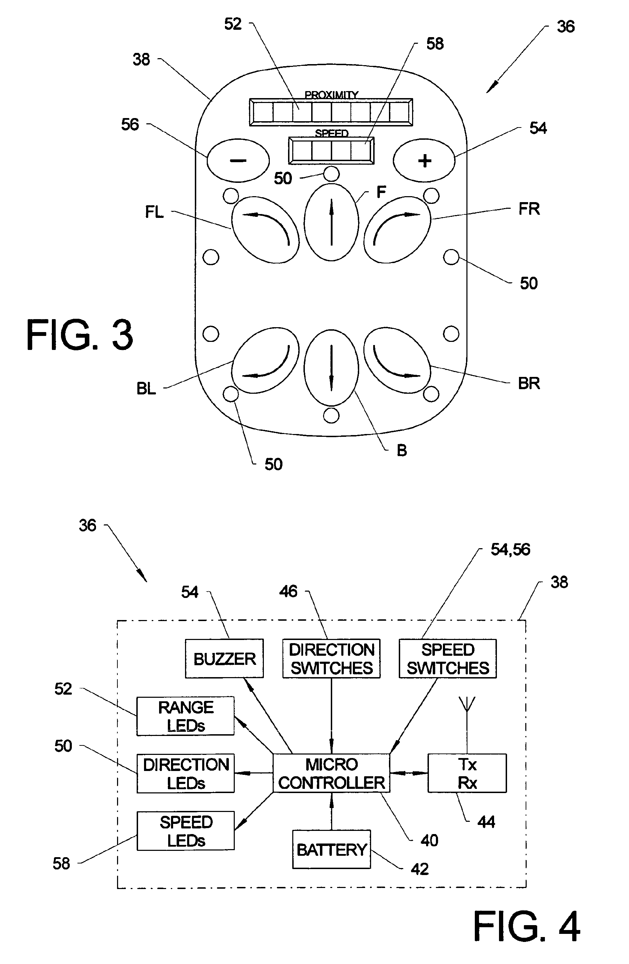

Referring to Figures 1 and 2 of the drawings, a caravan 10 has a chassis (not shown), a body 12, a pair of road wheels 14L,R and a towing hitch 16. A motor unit 18 is mounted on the chassis adjacent each road wheel 14. Each motor unit 18 has a friction roller 20 rotationally coupled to an electric motor 22L,22R. Each friction roller 20 can be moved, upon manual operation of a mechanism 24, between a disengaged position and an engaged position. In the disengaged position, the roller 20 is spaced from the tyre of the respective wheel 14. In the engaged position, the roller 20 presses against the tread of the tyre so that as the roller 20 is rotated by its motor 22L,R, the wheel 14 rotates. The caravan 10 also has a control box 26 and a 12 volt lead-acid battery 28 for powering the control box 26 and motors 22L,R. The control box 26 contains a microcontroller 30, radio receiver 32 and motor driver circuit 34. Referring to Figures 3 and 4 of the drawings, a remote control 36 is associated with the caravan 10. The remote control 36 has a hand-holdable housing 38 containing a microcontroller 40, small battery 42 and radio transmitter 44 for communicating with the radio receiver 32 of the control box 26. The microcontroller 40 is responsive to a number of user-operable direction switches referenced F,FL,FR,B,BL,BR in Figure 3 and referenced 46 in Figure 4. In response to operation of one or more of the direction switches 46, the microcontroller causes the transmitter 44 to send a coded signal, and in response to reception of such a coded signal by the receiver 32, the microcontroller 30 causes the motor driver circuit 34 to drive the motors 22L,R in particular manners in dependence upon the signal so that the wheels 14L,R rotate as follows:

| Switch(es) 46 operated | Rotation of left wheel 14L | Rotation of right wheel 14R | Overall manoeuvre of caravan 10 |
|---|---|---|---|
| F | Forwards | Forwards | Forwards |
| B | Backwards | Backwards | Backwards |
| FL | None | Forwards | Forwards and to the left |
| FR | Forwards | None | Forwards and to the right |
| BL | None | Backwards | Backwards and to the left |
| BR | Backwards | None | Backwards and to the right |
| FL and BR | Backwards | Forwards | Anticlockwise spin |
| BL and FR | Forwards | Backwards | Clockwise spin |
| Other combinations | None | None | None |

The basic arrangement insofar as has been described in the previous paragraph is well known. A system of motor units 24, control box 26 and remote control 36 is available, for example, under the mark POWRTOUCH® from Powrwheel Limited, BH23 4HD, United Kingdom.

In the embodiment of the invention, the system described above is modified firstly to provide a proximity detection facility and secondly to provide a speed variation facility.

### Proximity detection

With regard to the proximity detection facility, a number of proximity sensors 48 are mounted on and around the body 12 or chassis of the caravan 10. In the example shown in Figure 1, four of the ten sensors 48 are mounted adjacent the corners of the body 12 of the caravan 10, facing away from the corners; one of the sensors 48 is mounted centrally at the rear of the body 12, facing rearwards; one of the sensors 48 is mounted adjacent the towing hitch 16, facing forwards; and two of the sensors 48 are mounted along each side of the body, facing sideways.

Each proximity sensor 48 may employ known techniques and may include an ultrasonic transmitter that is driven with coded pulses, an ultrasonic receiver, and a circuit that (i) discriminates pulse-coded ultrasound received by the receiver that is caused by reflection at an obstacle or other object of the pulse-coded ultrasound transmitted by the transmitter, (ii) determines the range between the sensor 48 and the obstacle from the time of flight of the ultrasound, (iii) applies a threshold which may be range dependent so that extraneous and distant discriminations are ignored and (iv) provides an output signal dependent on the determined range of the obstacle. Such techniques are used in, for example, motor vehicle parking aids. Other techniques may, however, be employed.

The outputs from the ten proximity sensors 48 are supplied to the microcontroller 30 in the control box 26. The receiver 32 in the control box 26 also acts as a transmitter. When the microcontroller 30 receives a signal from one of more of the proximity sensors 48 indicative of an obstacle, it causes the transceiver 32 to transmit a coded 'proximity' signal indicating which of the proximity sensors 48 is detecting an obstacle and indicating the obstacle range (if only one of the proximity sensors 48 is detecting an obstacle) or the shorter or shortest obstacle range (if more than one of the proximity sensors 48 is detecting an obstacle).

The remote control 36 has an array of ten direction LEDs 50 arranged around the direction key switches 46. Each direction LED 50 corresponds to a respective one of the proximity sensors 48, and the layout of the direction LEDs 50 corresponds to the layout of the proximity sensors 48. Therefore, for example, the top direction LED 50 adjacent the key switch F corresponds to the proximity sensor 48 at the front of the caravan 10 adjacent the towing hitch 16, and the bottom left direction LED 50 adjacent the key switch BL corresponds to the proximity sensor 48 at the rear left corner of the caravan 10. The remote control 36 also has an LED bargraph 'range' display 52 having eight segments, and a buzzer 54. The transmitter 44 in the remote control 36 also acts as a receiver and passes any received signals to the microcontroller 40. In response to reception by the transceiver 44 of a proximity signal, the microcontroller 40 (i) illuminates the direction LED or LEDs 50 corresponding the proximity sensor or sensors 48 that are detecting an obstacle, (ii) illuminates a number of segments in the range display 52 corresponding to the obstacle range (e.g. one segment for less than 3.2 m, two segments for 2.8 m, and so on until all eight segments are illuminated for a range of less than 0.4 m) and (iii) sounds the buzzer 54 with pulses having a temporal spacing proportional to the obstacle range, and continuously once the obstacle spacing is less than 0.4 m. The buzzer 54 alerts the operator to the detection of an obstacle even if the operator is not looking at the remote control 36, and the operator can then see from the remote control 36 an indication of the location(s) of the detected obstacle(s) and an indication of obstacle range.

### Speed variation

With regard to the speed variation facility, the remote control 36 has an acceleration key switch 54 and a deceleration key switch 56 above the direction switches 46, and an LED bargraph 'speed' display 58 having four segments between the switches 54,56. Also, the motor driver circuit 34 is operable, under control of the microcontroller 30 to vary the effective voltage applied to each motor 22L,R. This may be achieved by driving each motor 22L,R with a voltage that is pulse width modulated at a predetermined frequency with a duty ratio that can be varied between a minimum that is sufficient to enable the motor 22L,R to turn the respective wheel 14L,R slowly and a maximum of 100%. This results in the effective voltage V_{eff} supplied to each motor 22L,R being variable between Vₘᵢₙ and Vₘₐₓ, the latter being nominally 12 Volts, or, of course, being zero when the motor 22L,R is not being driven. The effective voltage V_{eff} may be continuously variable between Vₘᵢₙ and Vₘₐₓ, or it may be variable in a number of steps, for example with four or eight discrete values. In the following description, an example of four values of V_{eff}, in addition to zero, will be used.

In operation, the coded signal that is transmitted from the transceiver 44 in the remote control 36 to the transceiver 32 in the control box 26 includes an indication of whether the acceleration switch 54 or the deceleration switch 56 is depressed. Also, the coded signal that is transmitted from the transceiver 32 in the control box 26 to the transceiver 44 in the remote control 36 includes an indication of the effective voltage V_{eff} that is being supplied to the motor(s) 22L,R. When a manoeuvre is commenced by the operator pressing one or two of the direction switches 46 as described in the table given above in the 'basic system' section, the microcontroller 30 in the control box 26 causes the motor(s) 22L,R that are to be driven initially to be driven with the minimum effective voltage Vₘᵢₙ, of the appropriate polarity. Then if the acceleration switch 54 is pressed by the operator, for each second that the switch 54 remains depressed, the microcontroller 30 causes the effective driving voltage V_{eff} to be increased by one step, until either the operator releases the switch 54 of the voltage Vₘₐₓ is reached. If the deceleration switch 56 is pressed by the operator, for each second that the switch 56 remains depressed, the microcontroller 30 causes the effective driving voltage V_{eff} to be decreased by one step, until either the operator releases the switch 56 of the voltage Vₘᵢₙ is reached. Also, based on the indication of the effective voltage V_{eff} that is being supplied to the motor(s) 22L,R, as included in the coded signal sent from the transceiver 32 to the transceiver 44, the microcontroller 40 in the remote control 36 illuminates a corresponding number of LEDs in the speed display 58, for example one LED for Vₘᵢₙ increasing to all four LEDs for Vₘₐₓ. After the manoeuvre is ended by the operator releasing the direction switch(es) 46, and the next manoeuvre is commenced, the microcontroller 30 causes the motor(s) 22L,R to be driven with the minimum effective voltage Vₘᵢₙ at the beginning of that next manoeuvre.

### Modifications and developments

Many modifications and developments may be made to the embodiment of the invention described above. For example, the remote control 36 may have a standby state in which it consumes minimal power, and may be changed between its standby state and active state by simultaneously pressing a pair of the switches 46,54,56 that are not normally pressed simultaneously while manoeuvring the caravan 10. The control box 26 may also have such a standby state, and may be changed between its standby state and active state by simultaneously pressing the same pair or a different pair of the switches 46,54,56 that are not normally pressed simultaneously while manoeuvring the caravan 10. Rather than employing key switches 46,54,56 for the direction and/or speed control, other forms of input devices such as joysticks may be used.

It will be appreciated that, in the event of the battery 42 of the remote control 36 going flat, or there being radio interference that degrades the signals received by the transceivers 32,44, the system may not operate correctly. In order to cope with these situations, a cable may be provided by which the user can temporarily connect a port in the control box 26 with a port in the remote control 36, and by which power can be fed from the caravan battery 28 to the circuitry of the remote control 36, and the coded signals can be carried between the microcontrollers 30, 40.

It should be noted that the embodiment of the invention has been described above purely by way of example and that many other modifications and developments may be made thereto within the scope of the present invention.

## Claims

1. A system for manoeuvring a wheeled trailer when it is not being towed, the system comprising at least one motor unit operable to move the trailer, a hand-holdable remote control operable by an operator of the system positioned near the trailer so as to control the motor unit(s), and detector means for mounting on the trailer and detecting obstacles in the proximity of the trailer, the remote control being arranged to provide to the operator an indication of any obstacles detected by the detector means.

2. A system as claimed in claim 1, wherein the detector means is operable to detect obstacles in front of, behind, at the corners of, and at least part-way along the sides of the trailer.

3. A system for assisting in manoeuvring a wheeled trailer, the system comprising detector means for mounting on the trailer and detecting obstacles in front of, behind, at the corners of, and at least part-way along the sides of the trailer, and means for providing an indication of a detected obstacle to a person manoeuvring the trailer.

4. A system as claimed in any preceding claim, wherein the remote control or indicating means is operable to provide an indication of the general direction of a detected obstacle relative to the trailer.

5. A system as claimed in claim 4, wherein the remote control or indicating means is arranged to provide distinct indications of obstacles detected adjacent each of four corners and each of the front and back of the trailer.

6. A system as claimed in claim 4 or 5 when directly or indirectly dependent on claim 2 or 3, wherein the remote control or indicating means is arranged to provide distinct indications of obstacles detected to each side of the trailer.

7. A system as claimed in any preceding claim, wherein the remote control or indicating means is operable to provide an indication of the distance of the detected obstacle from the trailer.

8. A system as claimed in claim 1 or 2, or any of claims 4 to 7 when directly or indirectly dependent on claim 1, wherein the remote control is operable to enable the operator to select different operations of the motor unit(s) to perform different manoeuvres of the trailer, the remote control also being operable to enable the operator to vary the speed of at least some of the manoeuvres.

9. A system for manoeuvring a wheeled trailer when it is not being towed, the system comprising at least one motor unit operable to move the trailer, a hand-holdable remote control operable by an operator of the system positioned near the trailer so as to control the motor unit(s) and by which the operator can select different operations of the motor unit(s) to perform different manoeuvres of the trailer, the remote control also being operable to enable the operator to vary the speed of at least some of the manoeuvres.

10. A system as claimed in claim 8 or 9, wherein the remote control includes a first input element or set of input elements operable by the operator to select the manoeuvres, and a second input element or set of input elements operable by the operator to control the speed of the selected manoeuvre.

11. A system as claimed in claim 10, wherein, in response to operation of the first element(s), a control means is operable to cause the motor unit(s) initially to rotate relatively slowly, and, in response to operation the second input element or at least one of the second input elements, the control means is operable to cause the speed of the motor unit(s) to increase.

12. A system as claimed in claim 10 or 11, wherein one of the second set of input elements is operable to cause the speed of the motor unit(s) to increase, and another of the second set of input elements is operable to cause the speed of the motor unit(s) to decrease.

13. A system as claimed in any of claims 8 to 12, wherein the remote control is arranged to provide to the operator an indication related to the speed of the manoeuvre.

14. A system as claimed in any preceding claim, wherein there are at least two such motor units each for mounting on the trailer so as to be selectively engageable and disengageable with a respective one of the wheels and operable when engaged so as to rotate that wheel.
